# FASCICULE DE BREVET EUROPEEN

(11) **EP 3 291 758 B1**
(45) Date de publication et mention de la délivrance du brevet: **10.07.2019**
(21) Numéro de dépôt: 16722383.3
(22) Date de dépôt: 04.05.2016
(51) Int. Cl.: A61C 8/00, A61C 13/08, A61C 13/083, A61C 13/09, A61C 13/20, A61C 13/265, A61C 13/34

(54) **DISPOSITIF DE LIAISON ENTRE UNE PROTHÈSE DENTAIRE ET UN MAÎTRE-MODÈLE**
VERBINDUNGSVORRICHTUNG EINER ZAHNPROTHESE UND EINEM MEISTERMODELL
CONNECTION DEVICE BETWEEN A DENTAL PROSTHESIS AND A MASTER MODEL

(30) Priorité: 06.05.2015 FR 1554076
(43) Date de publication de la demande: 14.03.2018
(73) Titulaire: ANTHOGYR, 74700 Sallanches (FR)
(72) Inventeur: RICHARD, Hervé, F-73590 Notre Dame De Bellecombe (FR)
(74) Mandataire: Cabinet Poncet
(86) Numéro de dépôt international: PCT/IB2016/052553
(87) Numéro de publication internationale: WO 2016/178166

(56) Documents cités:
- EP-A1- 0 154 137
- FR-A1- 3 012 319
- KR-A- 20120 100 060
- US-A- 5 234 339
- US-A- 5 885 078
- US-A- 5 885 078
- US-A1- 2003 044 753
- US-A1- 2003 044 753

## Description

### DOMAINE TECHNIQUE DE L'INVENTION

La présente invention concerne le domaine de l'implantologie dentaire, et notamment le traitement de l'édentement partiel ou complet d'arcade dentaire avec une prothèse unitaire ou plurale destinée à être rapportée et fixée sur un ou plusieurs implants dentaires.

Une prothèse plurale est destinée à reposer sur l'arcade dentaire du patient, en étant généralement fixée à plusieurs implants dentaires implantés dans l'os maxillaire ou mandibulaire du patient, pour former plusieurs dents prothétiques. Une prothèse unitaire est destinée à reposer sur l'arcade dentaire du patient, en étant généralement fixée à un seul implant dentaire implanté dans l'os maxillaire ou mandibulaire du patient, pour former une unique dent prothétique.

Que la prothèse soit unitaire ou plurale, sa fixation sur implant(s) peut être effectuée par l'intermédiaire d'au moins une vis de fixation. Cette vis peut être captive ou rapportée dans une cavité cylindrique ménagée dans la prothèse ou ménagée dans une armature à pilotis de prothèse. En cas de besoin, la prothèse peut être retirée, par exemple pour réparation, en dévissant les vis de fixation.

Un type de prothèse connu consiste en une prothèse fabriquée par stratification, c'est-à-dire par l'application de plusieurs couches successives de matériaux (tels que de la céramique, du vernis, etc.). Cette stratification s'effectue généralement à l'aide d'un pinceau. Pour que la prothèse en cours de fabrication soit dimensionnellement adaptée à la mâchoire du patient, celle-ci est posée sur un maître-modèle contenant au moins un analogue d'implant. Le maître-modèle est une représentation de la mâchoire du patient à restaurer par la prothèse à fabriquer. La prothèse en cours de fabrication est fixée par vissage dans l'analogue d'implant, comme illustré sur la figure 10 du document US 2003/044753 A1.

Le document US 2003/044753 A1 décrit une prothèse à stratifier formant avec un pilier un ensemble inséparable. Cet ensemble inséparable peut être rapporté et fixé sur un analogue d'implant au moyen d'une vis de fixation dont la tige passe à travers le pilier et dont la tête presse axialement le pilier contre l'analogue d'implant. La base du pilier comporte un logement hexagonal recevant une portion cylindrique hexagonale complémentaire prévue au sommet de l'analogue d'implant. Le logement et la portion cylindrique de formes non circulaires coopèrent pour empêcher toute rotation du pilier par rapport à l'analogue d'implant pour que la prothèse soit tenue en bonne place, par rapport aux dents adjacentes, lors de la stratification.

Entre chaque couche, la prothèse en cours de fabrication est passée au four pour fixer la couche de matériau précédemment appliquée.

Pour éviter une oxydation de la ou des vis lors de chaque passage au four, il convient de retirer la ou les vis de fixation et de séparer la prothèse en cours de fabrication du maître-modèle. Une oxydation des vis affaiblit leur résistance mécanique et induit un risque de rupture accidentelle.

Mais le retrait des vis s'avère long et délicat à effectuer sans endommager la couche de matériau fraîchement déposée. Et le retrait des vis est parfois impossible quand elles sont retenues captives dans la cavité cylindrique de la prothèse en cours de fabrication.

On connaît par ailleurs un autre type de prothèse qui consiste en une prothèse plurale comprenant une armature à pilotis. La prothèse est obtenue par ajout, sur les pilotis de l'armature à pilotis, de dents génériques, puis par enrobage de l'armature à pilotis et des dents génériques avec de la résine injectée dans une empreinte creuse dont la forme intérieure correspond à la forme extérieure de la prothèse à réaliser. Pour que la prothèse en cours de fabrication soit dimensionnellement adaptée à la mâchoire du patient, l'armature à pilotis est posée sur un maître-modèle contenant au moins un analogue d'implant. Le maître-modèle est une représentation de la mâchoire du patient à restaurer par la prothèse à fabriquer. L'armature à pilotis est fixée par vissage dans ledit au moins un analogue d'implant. Lors de l'injection de la résine, celle-ci enrobe l'armature à pilotis et en partie les dents génériques tout en comblant le volume disponible entre le maître-modèle et l'ensemble formé par l'armature à pilotis et les dents génériques.

Lors de l'injection de résine, celle-ci recouvre les têtes de vis. Une fois que la résine s'est solidifiée, on doit donc la percer pour retrouver un accès aux têtes de vis afin de pouvoir les dévisser en vue de séparer la prothèse du maître-modèle. La localisation de ce perçage est décidée de façon un peu approximative par le prothésiste, qui s'appuie sur des différences de teintes (induites par des différences d'épaisseur de résine) pour estimer au mieux l'endroit où commencer son trou. Le retrait des vis s'avère encore une fois très long.

Le document US 5,885,078 A s'intéresse au domaine des prothèses dentaires plurales reposant sur une pluralité d'implants en bouche d'un patient par l'intermédiaire d'une barre métallique. Ladite barre métallique est fixée sur un maître-modèle par l'intermédiaire d'une pluralité de vis venant en prise par vissage dans des analogues d'implant, et est ensuite chauffée par induction pour être conformée. Pour retirer ladite barre métallique du maître-modèle, il est nécessaire de retirer préalablement toutes les vis. Là encore, le retrait des vis s'avère long et délicat à effectuer.

Le document FR 3 012 319 A1 décrit une prothèse dentaire trans-fixée destinée à être fixée sur au moins un implant dentaire à l'aide d'au moins un verrou à ailettes radiales. Ledit verrou est monté rotatif et retenu en translation dans l'un de l'implant dentaire ou de la prothèse dentaire, tandis que l'autre de l'implant dentaire ou de la prothèse dentaire est muni d'une cavité de retenue. La cavité de retenue est pourvue d'excroissances saillantes. Les ailettes radiales et les excroissances saillantes sont conformées et dimensionnées de façon à coopérer par rotation du verrou pour retenir la prothèse dentaire trans-fixée sur l'implant dentaire.

### EXPOSE DE L'INVENTION

Un problème proposé par la présente invention est de faciliter et accélérer la mise en place et le retrait sur le maître-modèle d'une prothèse fabriquée par stratification ou d'une armature à pilotis pour la fabrication d'une prothèse par injection de résine, tout en limitant les risques de dégradation accidentelle de la prothèse.

Pour atteindre ces objets ainsi que d'autres, l'invention propose une utilisation selon la revendication 1.

Lors d'une telle utilisation, on fixe la prothèse (ou de l'armature à pilotis) sur le maître-modèle par un simple emmanchement qui est obtenu par un rapide et simple mouvement de translation relative (ou la combinaison de plusieurs) entre la prothèse (ou l'armature à pilotis) et le maître-modèle. L'emmanchement est réversible, de sorte que la séparation de la prothèse (ou de l'armature à pilotis) du maître-modèle se réduit également à un rapide et simple mouvement de translation relative (ou la combinaison de plusieurs) entre la prothèse (ou l'armature à pilotis) et le maître-modèle.

Il n'y a plus besoin de vis nécessitant une installation par vissage et un retrait par dévissage, ce qui accélère grandement la fabrication. L'emmanchement se fait en effet en force et procure ainsi un effort de retenue de la prothèse sur le maître-modèle, ledit effort de retenue étant suffisant pour la fabrication de la prothèse (par stratification ou enrobage) mais suffisamment faible pour autoriser une séparation de la prothèse et du maître-modèle sans risques de dégradation de la prothèse.

De préférence, le deuxième tronçon de connexion peut comporter un tronçon final conique ou tronconique faisant suite à la portion cylindrique, dont la section transversale diminue en s'étendant à l'écart du premier tronçon de connexion. Le maître-modèle comporte généralement plusieurs analogues d'implant dont les directions d'allongement sont le plus souvent obliques entre elles. Le tronçon final conique ou tronconique permet d'effectuer un centrage progressif des cavités cylindriques sur leur dispositif de liaison respectif, avec un certain jeu radial permettant de compenser le caractère oblique des analogues d'implant entre eux.

Avantageusement, le deuxième tronçon de connexion peut comporter au moins une fente radiale.

Ladite au moins une fente radiale, s'étendant longitudinalement le long de la portion cylindrique et, le cas échéant, le long du tronçon final conique ou tronconique, permet de conférer une certaine élasticité radiale au deuxième tronçon de connexion pour un emmanchement et un retrait facilités, tout en procurant une retenue par emmanchement suffisante pour éviter une séparation accidentelle de la prothèse (ou de l'armature à pilotis) et du maître-modèle.

De préférence, pour permettre sa fixation selon sa première extrémité sur un analogue d'implant, le dispositif de liaison peut comporter une empreinte de vissage à section transversale non circulaire, accessible depuis la deuxième extrémité à travers la portion cylindrique et, le cas échéant, à travers le tronçon final conique ou tronconique.

Avantageusement, le dispositif de liaison peut être fabriqué en une matière ayant une température de fusion supérieure ou égale à 80°C pour avoir une bonne tenue géométrique et mécanique lors de l'injection de résine pour la fabrication d'une prothèse comportant une armature à pilotis.

On a obtenu de bons résultats en utilisant du polyoxyméthylène (POM) vendu sous la marque DELRIN® et présentant une température de fusion d'environ 175°C. Le DELRIN® présente en outre une bonne stabilité dimensionnelle dans la plage habituelle de température de la résine injectée.

L'utilisation selon la présente invention permet la réception sur un maître-modèle d'une prothèse dentaire, ladite prothèse comportant au moins une cavité cylindrique débouchante conformée pour recevoir par emmanchement la portion cylindrique du premier tronçon de connexion.

L'utilisation selon la présente invention permet également la réception sur un maître-modèle d'une armature à pilotis comportant plusieurs cavités cylindriques débouchantes. On peut ainsi fabriquer une prothèse dentaire du type prothèse dentaire plurale comprenant ladite armature à pilotis.

De préférence, la cavité cylindrique débouchante peut être conformée pour recevoir une vis de fixation pour la fixation de la prothèse dentaire sur un implant dentaire. On utilise ainsi opportunément, pour le posage de la prothèse sur le maître-modèle, les cavités cylindriques déjà prévues dans la prothèse.

Selon un autre aspect, l'invention propose un procédé de stratification d'une prothèse dentaire selon la revendication 6.

Un tel procédé s'avère très avantageux pour limiter les risques de dégradation accidentelle et diminuer le temps de fabrication de façon significative, notamment lorsque :
- le maître-modèle comporte une pluralité d'analogues d'implant comportant un tronçon fileté intérieurement,
- la prothèse dentaire est du type bridge et comporte une pluralité de cavités cylindriques débouchantes.

Selon un autre aspect, l'invention propose un procédé de fabrication d'une prothèse dentaire plurale selon la revendication 9.

### DESCRIPTION SOMMAIRE DES DESSINS

D'autres objets, caractéristiques et avantages de la présente invention ressortiront de la description suivante de modes de réalisation particuliers, faite en relation avec les figures jointes, parmi lesquelles :
- la figure 1 est une vue en perspective d'un premier mode de réalisation de dispositif de liaison destiné à être utilisé dans le cadre de la présente invention ;
- la figure 2 est une vue de côté du dispositif de liaison de la figure 1 ;
- la figure 3 est une vue de côté en coupe longitudinale du dispositif de liaison de la figure 1 ;
- la figure 4 est une vue de côté en coupe longitudinale d'un analogue d'implant muni du dispositif de liaison de la figure 1 ;
- la figure 5 est une vue en perspective d'un deuxième mode de réalisation de dispositif de liaison destiné à être utilisé dans le cadre de la présente invention ;
- la figure 6 est une vue de côté du dispositif de liaison de la figure 5 ;
- la figure 7 est une vue de côté en coupe longitudinale du dispositif de liaison de la figure 5 ;
- la figure 8 est une vue de côté en coupe longitudinale d'un analogue d'implant muni du dispositif de liaison de la figure 5 ;
- la figure 9 est une vue en perspective d'un maître-modèle comportant une pluralité d'analogues d'implant ;
- la figure 10 est une vue perspective du maître-modèle de la figure 9 sur lequel ont été rapportés et fixés plusieurs dispositifs de liaison pour mettre en oeuvre la présente invention ;
- la figure 11 est une vue de côté en coupe du maître-modèle de la figure 9 et d'une prothèse en cours de fabrication par stratification avant posage de cette dernière sur le maître-modèle ;
- la figure 12 est une vue de côté en coupe du maître-modèle et de la prothèse de la figure 11 assemblés pour la réalisation d'une stratification ;
- la figure 13 est une vue de côté en coupe du maître-modèle de la figure 9 et d'une armature à pilotis pour la fabrication d'une prothèse par injection de résine, avant posage de l'armature à pilotis sur le maître-modèle ;
- la figure 14 est une vue de côté en coupe du maître-modèle et de l'armature à pilotis de la figure 13 assemblés ;
- la figure 15 est une vue de côté en coupe du maître-modèle et de l'armature à pilotis assemblés de la figure 13 avant leur introduction dans une empreinte creuse, correspondant à la forme extérieure de la prothèse dentaire à fabriquer, et avec des dents génériques ; et
- la figure 16 est une vue de côté en coupe du maître-modèle, de l'armature à pilotis, de l'empreinte creuse et des dents génériques avant une injection de résine entre l'empreinte creuse et le maître-modèle.

### DESCRIPTION DES MODES DE REALISATION PREFERES

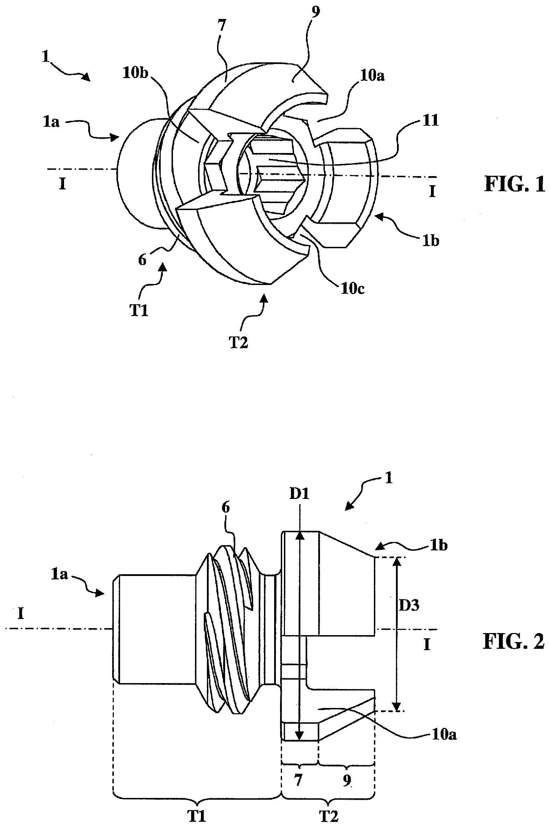

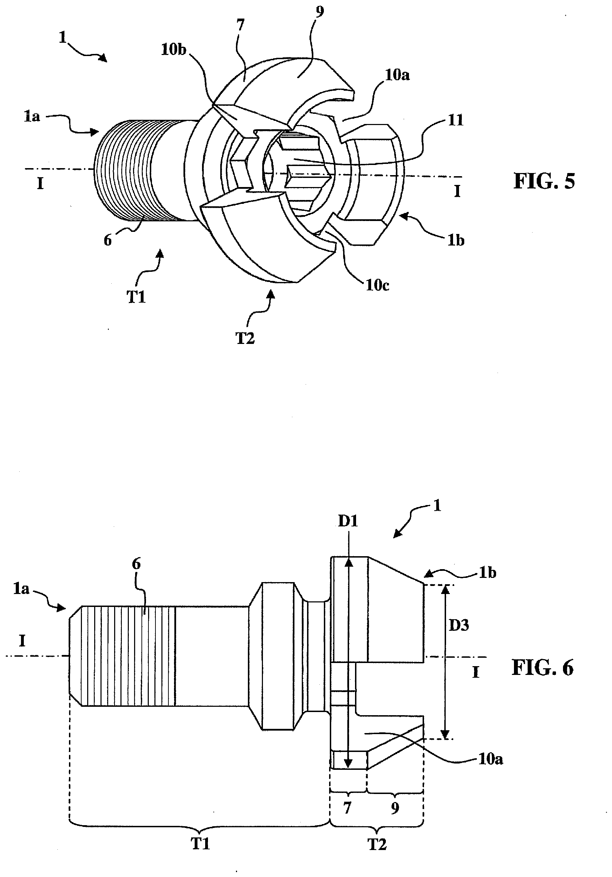

Sur les figures 1 à 4 est illustré un premier mode de réalisation de dispositif de liaison 1 destiné à être utilisé dans le cadre de la présente invention, tandis qu'un deuxième mode de réalisation est illustré sur les figures 5 à 8.

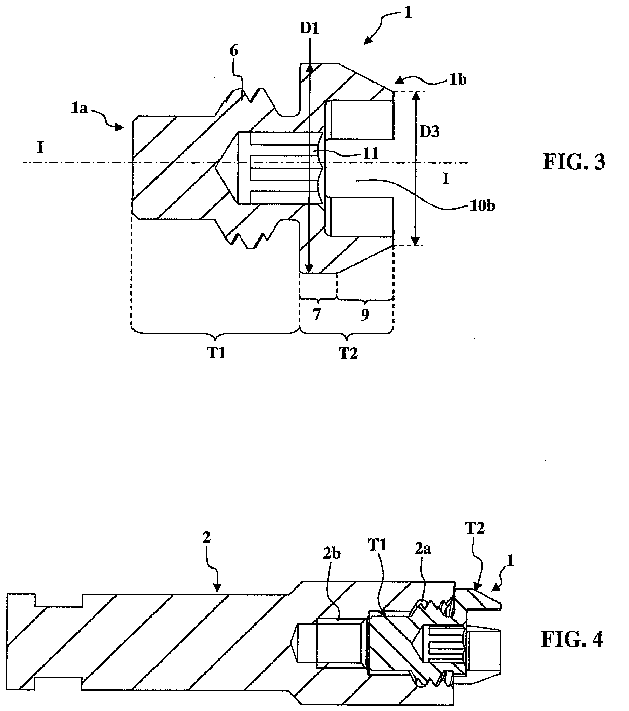

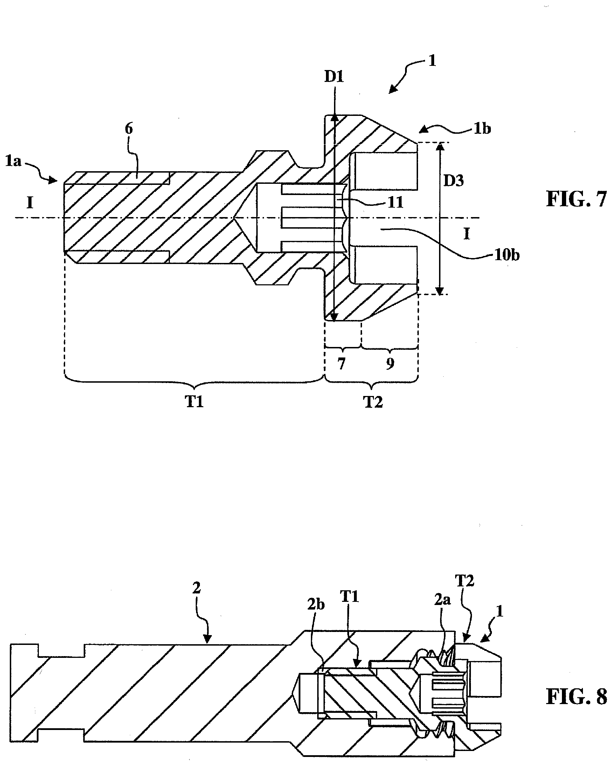

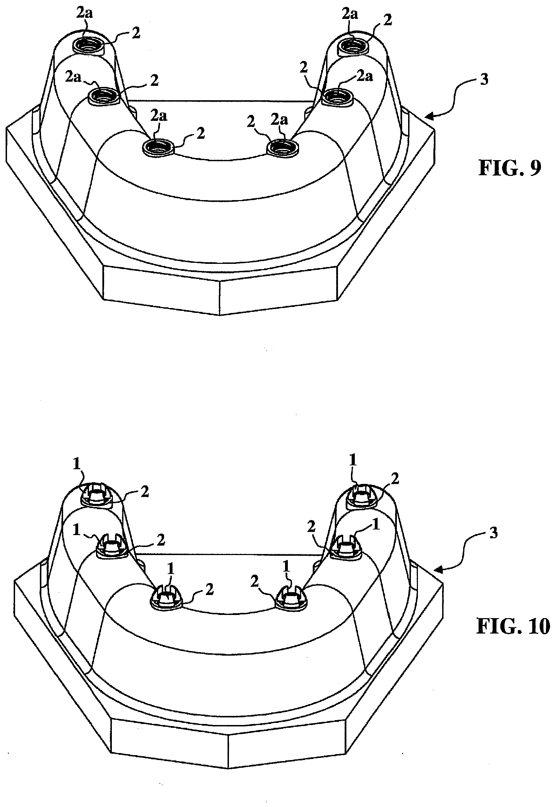

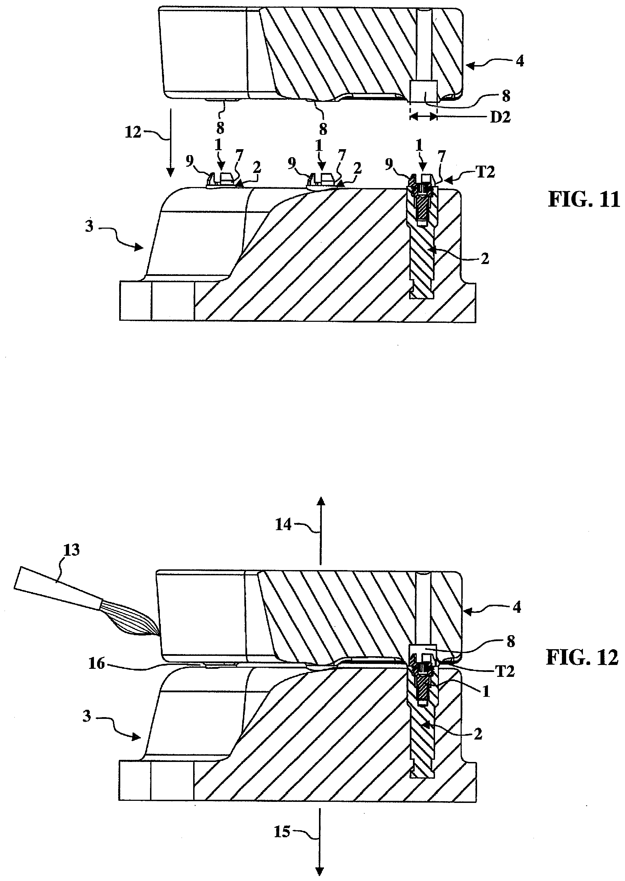

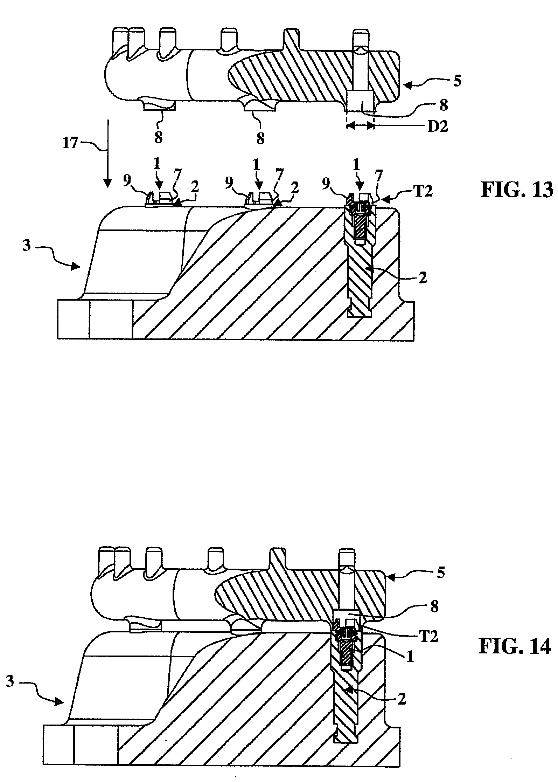

Sur ces figures, le dispositif de liaison 1 est formé d'une seule pièce et s'étend longitudinalement entre une première extrémité 1a et une deuxième extrémité 1b selon une direction longitudinale I-I. La première extrémité 1a comporte un premier tronçon de connexion T1 destiné à être reçu dans un analogue d'implant 2 (figures 4 et 8) contenu dans un maître-modèle 3 (figure 9). La deuxième extrémité 1b comporte un deuxième tronçon de connexion T2 destiné à être reçu dans une prothèse dentaire 4 (figure 11) ou dans une armature à pilotis 5 pour prothèse dentaire (figure 13).

Le premier tronçon de connexion T1 comporte un filetage extérieur 6 destiné à être reçu par vissage dans un tronçon fileté intérieurement 2a ou 2b ménagé dans l'analogue d'implant 2 (figures 4 et 8).

Le deuxième tronçon de connexion T2 comporte une portion cylindrique 7 destinée à être reçue par emmanchement dans une cavité cylindrique 8 débouchante correspondante ménagée dans la prothèse dentaire 4 (figure 11) ou dans l'armature à pilotis 5 pour prothèse dentaire (figure 13).

Le deuxième tronçon de connexion T2 comporte un tronçon final tronconique 9 (ou conique) faisant suite à la portion cylindrique 7. La section transversale du tronçon final tronconique 9 diminue en s'étendant à l'écart du premier tronçon de connexion T1.

Le deuxième tronçon de connexion T2 comporte trois fentes radiales 10a à 10c s'étendant longitudinalement le long de la portion cylindrique 7 et le long du tronçon final tronconique 9.

Comme on le voit plus particulièrement sur les figures 1, 3, 5 et 7, le dispositif de liaison 1 comporte une empreinte de vissage 11 à section transversale non circulaire (hexagonale en l'occurrence). Cette empreinte de vissage 11 est accessible depuis la deuxième extrémité 1b à travers la portion cylindrique 7 et le tronçon final tronconique 9. Le dispositif de liaison des figures 1 à 4 diffère du dispositif de liaison 1 des figures 5 à 8 par la localisation du filetage extérieur 6.

La portion cylindrique 7 présente une section transversale circulaire de diamètre D1 légèrement supérieur ou égal au diamètre D2 de la cavité cylindrique 8 prévue dans la prothèse dentaire 4 (figure 11) ou dans l'armature à pilotis 5 pour prothèse dentaire (figure 13). La portion cylindrique 7 est ainsi à même de s'emmancher avec un léger effort dans la cavité cylindrique 8.

Les fentes radiales 10a à 10c procurent une relative compressibilité radiale à la portion cylindrique 7 pour favoriser son engagement en force dans la cavité cylindrique 8.

Le tronçon final tronconique 9 se termine par un diamètre D3 inférieur au diamètre D2 de la cavité cylindrique 8. Le tronçon final tronconique 9 s'engage ainsi facilement dans la cavité cylindrique 8 et permet d'effectuer un pré-centrage de la cavité cylindrique 8 par rapport à la portion cylindrique 7 avant que soit emmanchée en force la cavité cylindrique 8 sur la portion cylindrique 7.

La cavité cylindrique 8 débouchante de la prothèse dentaire 4 (figure 11) ou de l'armature à pilotis 5 pour prothèse dentaire (figure 13) est conformée pour recevoir une vis de fixation pour la fixation de la prothèse dentaire sur un implant dentaire installé dans la bouche du patient. On fait ainsi une double utilisation de la cavité cylindrique 8 en l'utilisant d'abord pour une fixation sur un maître-modèle 3 (figure 9) puis pour une fixation dans la bouche du patient.

Il doit être noté que, sur les figures, la cavité cylindrique 8 est représentée de façon simplifiée pour ne pas nuire à la compréhension du lecteur. En pratique, celle-ci peut par exemple comporter une gorge annulaire intérieure pour la réception d'une bague élastique (circlips) destinée à servir de siège sous une tête de vis.

L'utilisation selon l'invention d'un dispositif de liaison 1 tel que décrit précédemment lors d'un procédé de stratification d'une prothèse dentaire 4 est illustrée sur les figures 9 à 12.

Au cours de ce procédé, on fournit un maître-modèle 3 (figure 9) comprenant au moins un analogue d'implant 2 tel qu'illustré sur les figures 4 et 8 (étape a)). Ici, le maître-modèle 3 comporte six analogues d'implant 2 comportant chacun un tronçon fileté intérieurement 2a et/ou 2b.

Le praticien connecte alors par vissage la première extrémité 1a de six dispositifs de liaison 1 dans le tronçon fileté intérieurement 2a ou 2b des analogues d'implant 2. Si le praticien utilise des dispositifs de liaison 1 tels que celui illustré sur les figures 1 à 3, le dispositif de liaison est connecté par vissage dans le tronçon fileté intérieurement 2a des analogues d'implant 2. En revanche, quand il fait usage de dispositifs de liaison 1 tels que celui illustré sur les figures 5 à 7, les dispositifs de liaison 1 sont connectés par vissage dans le tronçon fileté intérieurement 2b des analogues d'implant 2.

Lors de la connexion par vissage, le praticien entraîne en rotation les dispositifs de liaison 1 au moyen d'un outil de vissage de forme hexagonale complémentaire à l'empreinte de vissage 11.

A l'issue de cette étape de connexion (étape b)), le maître-modèle 3 se trouve dans la configuration illustrée sur la figure 10.

Lors d'une étape c), on fournit une prothèse dentaire 4 à stratifier telle qu'illustrée sur la figure 11, portant autant de cavités cylindriques 8 débouchantes qu'il existe d'analogues d'implant 2 sur le maître-modèle 3. Les cavités cylindriques 8 sont prévues dans la prothèse 4 en exacte correspondance des analogues d'implant 2. A noter ici que les analogues d'implant 2 peuvent être orientés de façon oblique entre eux pour satisfaire des contraintes d'implantation estimées nécessaires par le praticien. Sur les figures 9 à 12, les analogues d'implant 2 ont été représentés en étant orientés selon des directions d'allongement parallèles entre elles mais seulement pour faciliter la compréhension du lecteur.

La prothèse dentaire 4 est du type bridge et comporte une pluralité de cavités cylindriques 8 débouchantes conformées pour recevoir une vis de fixation pour la fixation de la prothèse dentaire 4 sur des implants dentaires disposés dans la bouche du patient.

Lors d'une étape d), on met en place la prothèse dentaire 4 sur le maître-modèle 3 au moyen d'un mouvement de translation relative (flèche 12 sur la figure 11) entre la prothèse dentaire 4 et le maître-modèle 3. Cela provoque un emmanchement de la cavité cylindrique 8 débouchante sur les portions cylindriques 7 des dispositifs de liaison 1.

Lors de cette étape, les tronçons finaux tronconiques 9 effectuent un pré-centrage des cavités cylindriques 8 par rapport aux portions cylindriques 7. Cela est d'autant plus utile lorsque les analogues d'implant 2 sont orientés selon des directions obliques.

A noter que le mouvement relatif entre la prothèse dentaire 4 et le maître-modèle 3 peut comporter plus d'une translation lorsque les analogues d'implant 2 sont orientés de façon oblique entre eux. Le mouvement principal reste un mouvement de translation relative tel qu'illustré par la flèche 12 sur la figure 11, les autres mouvements de translation étant généralement induits par les emmanchements des cavités cylindriques 8 sur les tronçons finaux tronconiques 9 et portions cylindriques 7 lorsque le mouvement de translation 12 touche à sa fin.

A l'issue de cette mise en place de la prothèse dentaire 4 sur le maître-modèle 3, on se trouve dans la configuration telle qu'illustrée sur la figure 12. On peut alors appliquer, lors d'une étape e), au moins une strate sur la prothèse dentaire 4 à l'aide d'un pinceau 13 par exemple. Aucune fixation par vis n'est nécessaire.

Une fois la stratification terminée, le praticien retire la prothèse dentaire 4 à l'écart du maître-modèle 3 au moyen d'un mouvement de translation relative entre la prothèse dentaire 4 et le maître-modèle 3 tel qu'illustré par les flèches 14 et 15. Pour ce faire, le praticien peut insérer un outil dans l'espace résiduel 16 situé entre la prothèse dentaire 4 et le maître-modèle 3 pour faire levier et provoquer une séparation de la prothèse dentaire 4 et du maître-modèle 3 conduisant à une extraction des portions cylindriques 7 des dispositifs de liaison 1 hors des cavités cylindriques 8.

Lors de cette étape de retrait (étape f)), les dispositifs de liaison 1 restent solidaires du maître-modèle 3 grâce à leur liaison vissée. Un autre type de liaison peut néanmoins être utilisé, tel qu'une liaison par interférence de formes (au moyen de baïonnettes par exemple), dès lors que ce type de liaison procure une retenue des dispositifs de liaison 1 dans les analogues d'implant 2 plus élevée que la liaison par emmanchement des cavités cylindriques 8 sur les portions cylindriques 7.

A l'issue de l'étape de retrait, la prothèse dentaire peut être passée au four pour fixer la strate appliquée lors de l'étape e).

Selon l'invention, le dispositif de liaison 1 est également utilisable dans le cadre d'un procédé de fabrication d'une prothèse dentaire plurale comportant une armature à pilotis 5. Un tel procédé est illustré sur les figures 9, 10 et 13 à 16.

Lors d'une étape a1), on fournit un maître-modèle 3 (figure 9) comprenant plusieurs analogues d'implant 2 comportant un tronçon fileté intérieurement 2a et/ou 2b.

Lors d'une étape b1), on connecte par vissage la première extrémité 1a de dispositif de liaison 1 tel que décrit précédemment dans le tronçon fileté intérieurement 2a ou 2b des analogues d'implant 2 (figure 10).

Lors d'une étape c1), on fournit une armature à pilotis 5 (figure 13) comprenant plusieurs cavités cylindriques 8 débouchantes. Les cavités cylindriques 8 débouchantes sont conformées pour recevoir une vis de fixation pour la fixation de la prothèse dentaire sur des implants dentaires prévus dans la bouche du patient.

Lors d'une étape d1), on met en place l'armature à pilotis 5 sur le maître-modèle 3 en provoquant un emmanchement des cavités cylindriques débouchantes 8 sur la portion cylindrique 7 des dispositifs de liaison 1. Pour ce faire, on applique un mouvement de translation relative (flèche 17 sur la figure 13) entre l'armature à pilotis 5 et le maître-modèle 3. Là encore, plus d'une translation peut être nécessaire selon les degrés d'inclinaison des analogues d'implant 2 entre eux.

On se trouve alors dans la configuration illustrée sur la figure 14 dans laquelle l'armature à pilotis 5 repose sur les analogues d'implant 2 du maître-modèle 3 et y est maintenue en place par un emmanchement des dispositifs de liaison 1 dans les cavités cylindriques 8. Là encore, aucune fixation par vis n'est nécessaire.

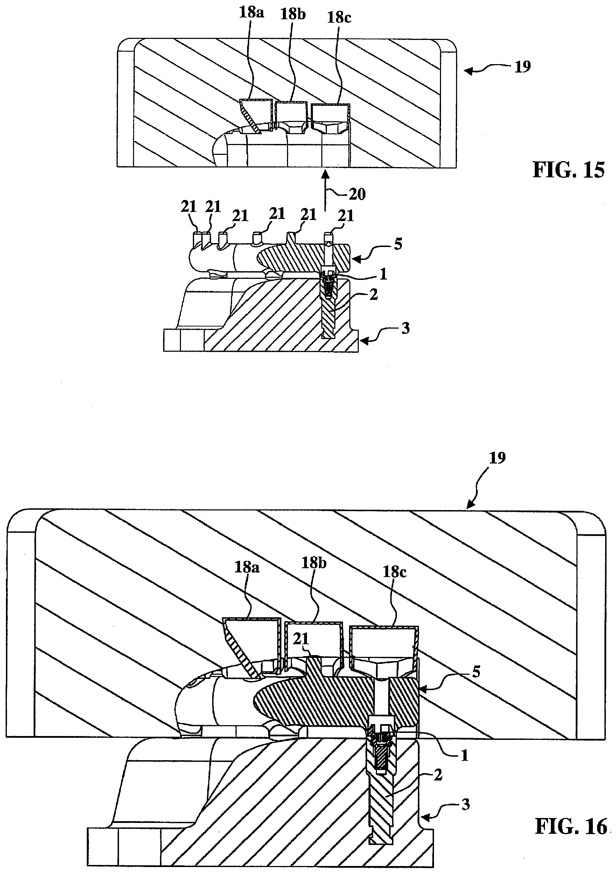

Le praticien rapporte alors, lors d'une étape e1) des dents génériques 18a à 18c dans une empreinte creuse 19 correspondant à la forme extérieure de la prothèse dentaire à fabriquer. L'armature à pilotis 5 est alors insérée dans l'empreinte creuse 19 selon le mouvement de translation illustré par la flèche 20 (figure 15) en faisant pénétrer chaque pilotis 21 dans sa dent générique 18a à 18c correspondante.

On se trouve alors dans la configuration illustrée sur la figure 16.

Lors d'une étape f1), on injecte de la résine entre l'empreinte creuse 19 et le maître-modèle 3 de façon à enrober les dents génériques 18a à 18c et l'armature à pilotis 5. On obtient ainsi une prothèse dentaire conforme d'un côté au projet de prothèse dentaire grâce à l'empreinte creuse 19, et conforme sur le côté opposé à la mâchoire du patient (sur laquelle doit être implantée la prothèse) grâce au maître-modèle 3.

Après solidification de la résine, on extrait (lors d'une étape g1)) hors de l'empreinte creuse 19 l'ensemble, fixé au maître-modèle 3, formé par les dents génériques 18a à 18c et l'armature à pilotis 5 enrobées.

Enfin, lors d'une étape h1), on retire le sous-ensemble formé par les dents génériques 18a à 18c et l'armature à pilotis 5 enrobées à l'écart du maître-modèle 3 au moyen d'un mouvement de translation relative entre ledit sous-ensemble et le maître-modèle 3. Ce mouvement de translation peut être effectué en faisant levier à l'aide d'une pièce que le praticien vient intercaler entre le sous-ensemble formé par les dents génériques 18a à 18c et l'armature à pilotis 5 d'une part, et le maître-modèle 3 d'autre part.

Que ce soit pour la fabrication d'une prothèse dentaire 4 par stratification ou pour la fabrication d'une prothèse dentaire par injection de résine, l'utilisation du dispositif de liaison 1 permet de rapporter et fixer avec une tenue satisfaisante sur le maître-modèle 3 une prothèse 4 en cours de stratification ou une armature à pilotis 5, et ce sans avoir à utiliser de vis dont l'usage allonge considérablement le temps de travail du praticien. Et le retrait à l'écart du maître-modèle 3 de la prothèse 4 stratifiée pour son passage au four ou du sous-ensemble formé par les dents génériques 18a à 18c et l'armature à pilotis 5 est également rapide et facile pour le praticien.

La présente invention n'est pas limitée aux modes de réalisation qui ont été explicitement décrits, mais elle en inclut les diverses variantes et généralisations contenues dans le domaine des revendications ci-après.

## Revendications

1. Utilisation d'un dispositif de liaison (1) pour la liaison entre une prothèse dentaire (4) ou une armature à pilotis (5) pour prothèse dentaire et un maître-modèle (3) comprenant au moins un analogue d'implant (2) comprenant un tronçon fileté intérieurement (2a, 2b), ledit dispositif de liaison (1) s'étendant longitudinalement entre une première extrémité (1a) et une deuxième extrémité (1b), la première extrémité (1a) comportant un premier tronçon de connexion (T1) comprenant un filetage extérieur (6), la deuxième extrémité (1b) comportant un deuxième tronçon de connexion (T2) comprenant une portion cylindrique (7),
lors de laquelle le filetage extérieur (6) du premier tronçon de connexion (T1) est reçu par vissage dans le tronçon fileté intérieurement (2a, 2b) ménagé dans l'analogue d'implant (2),
**caractérisée en ce que**, lors de ladite utilisation, la portion cylindrique (7) du deuxième tronçon de connexion (T2) est reçue par emmanchement dans une cavité cylindrique (8) débouchante correspondante ménagée dans la prothèse dentaire (4) ou l'armature à pilotis (5) pour prothèse dentaire.

2. Utilisation selon la revendication 1, **caractérisée en ce que** le deuxième tronçon de connexion (T2) comporte un tronçon final conique ou tronconique (9) faisant suite à la portion cylindrique (7), dont la section transversale diminue en s'étendant à l'écart du premier tronçon de connexion (T1).

3. Utilisation selon l'une des revendications 1 ou 2, **caractérisée en ce que** le deuxième tronçon de connexion (T2) comporte au moins une fente radiale (10a-10c).

4. Utilisation selon l'une quelconque des revendications 1 à 3, **caractérisée en ce que** le dispositif de liaison (1) comporte une empreinte de vissage (11) à section transversale non circulaire, accessible depuis la deuxième extrémité (1b) à travers la portion cylindrique (7) et, le cas échéant, à travers le tronçon final conique ou tronconique (9).

5. Utilisation selon l'une quelconque des revendications 1 à 4, **caractérisée en ce que** le dispositif de liaison (1) est fabriqué en une matière ayant une température de fusion supérieure ou égale à 80°C.

6. Procédé de stratification d'une prothèse dentaire (4), **caractérisé en ce qu'**il comporte les étapes suivantes :
a) fournir un maître-modèle (3) comprenant au moins un analogue d'implant (2) comportant un tronçon fileté intérieurement (2a, 2b),
b) fournir un dispositif de liaison (1) s'étendant longitudinalement entre une première extrémité (1a) et une deuxième extrémité (1b), la première extrémité (1a) comportant un premier tronçon de connexion (T1) comprenant un filetage extérieur (6), la deuxième extrémité (1b) comportant un deuxième tronçon de connexion (T2) comprenant une portion cylindrique (7), et connecter par vissage la première extrémité (1a) dudit dispositif de liaison (1) dans le tronçon fileté intérieurement (2a, 2b) de l'analogue d'implant (2),
c) fournir une prothèse dentaire (4) à stratifier comportant au moins une cavité cylindrique (8) débouchante conformée pour recevoir par emmanchement la portion cylindrique (7) du premier tronçon de connexion (T1),
d) mettre en place la prothèse dentaire (4) sur le maître-modèle (3), en provoquant un emmanchement de la cavité cylindrique (8) débouchante sur la portion cylindrique (7) du deuxième tronçon de connexion (T2) au moyen d'un mouvement de translation relative entre la prothèse dentaire (4) et le maître-modèle (3),
e) appliquer au moins une strate sur la prothèse dentaire (4),
f) retirer la prothèse dentaire (4) à l'écart du maître-modèle (3) au moyen d'au moins un mouvement de translation relative entre la prothèse dentaire (4) et le maître-modèle (3), de façon à permettre un passage au four de la prothèse dentaire (4) sans le maître-modèle (3).

7. Procédé de stratification selon la revendication 6, **caractérisé en ce que** :
- le maître-modèle (3) comporte une pluralité d'analogues d'implant (2) comportant un tronçon fileté intérieurement (2a, 2b),
- la prothèse dentaire (4) est du type bridge et comporte une pluralité de cavités cylindriques (8) débouchantes.

8. Procédé de stratification selon l'une des revendications 6 ou 7, **caractérisé en ce que** la cavité cylindrique (8) débouchante est conformée pour recevoir une vis de fixation pour la fixation de la prothèse dentaire (4) sur un implant dentaire.

9. Procédé de fabrication d'une prothèse dentaire (4) plurale comprenant une armature à pilotis (5), **caractérisé en ce qu'**il comporte les étapes suivantes :
a1) fournir un maître-modèle (3) comprenant plusieurs analogues d'implant (2) comportant un tronçon fileté intérieurement (2a, 2b),
b1) fournir une pluralité des dispositifs de liaison (1) s'étendant longitudinalement entre une première extrémité (1a) et une deuxième extrémité (1b), la première extrémité (1a) comportant un premier tronçon de connexion (T1) comprenant un filetage extérieur (6), la deuxième extrémité (1b) comportant un deuxième tronçon de connexion (T2) comprenant une portion cylindrique (7), et connecter par vissage la première extrémité (1a) desdits dispositifs de liaison (1) dans le tronçon fileté intérieurement (2a, 2b) de plusieurs analogues d'implant (2),
c1) fournir une armature à pilotis (5) comprenant plusieurs cavités cylindriques (8) débouchantes conformées pour recevoir par emmanchement la portion cylindrique (7) du premier tronçon de connexion (T1),
d1) mettre en place l'armature à pilotis (5) sur le maître-modèle (3), en provoquant un emmanchement des cavités cylindriques (8) débouchantes sur la portion cylindrique (7) du deuxième tronçon de connexion (T2) des dispositifs de liaison (1) au moyen d'un mouvement de translation relative entre l'armature à pilotis (5) et le maître-modèle (3),
e1) placer des dents génériques (18a-18c) et l'armature à pilotis (5) fixée au maître-modèle (3) dans une empreinte creuse (19) correspondant à la forme extérieure de la prothèse dentaire à fabriquer, les dents génériques (18a-18c) étant alors disposées sur les pilotis (21) de l'armature à pilotis (5),
f1) injecter de la résine entre l'empreinte creuse (19) et le maître-modèle (3) de façon à enrober les dents génériques (18a-18c) et l'armature à pilotis (5),
g1) après solidification de la résine, extraire de l'empreinte creuse (19) l'ensemble, fixé au maître-modèle (3), formé par les dents génériques (18a-18c) et l'armature à pilotis (5) enrobées,
h1) retirer le sous-ensemble formé par les dents génériques (18a-18c) et l'armature à pilotis (5) enrobées à l'écart du maître-modèle (3) au moyen d'au moins un mouvement de translation relative entre ledit sous-ensemble et le maître-modèle (3).

10. Procédé de fabrication selon la revendication 9, **caractérisé en ce que** les cavités cylindriques (8) débouchantes sont conformées pour recevoir une vis de fixation pour la fixation de la prothèse dentaire (4) sur un implant dentaire.

## Patentansprüche

1. Verwendung einer Verbindungsvorrichtung (1) zur Verbindung zwischen einer Zahnprothese (4) oder einem Abutment-Gerüst (5) für eine Zahnprothese und einem Mastermodell (3) mit zumindest einem Implantatanalog (2), aufweisend mindestens einen Innengewindeabschnitt (2a, 2b), wobei sich die Verbindungsvorrichtung (1) längs zwischen einem ersten Ende (1a) und einem zweiten Ende (1b) erstreckt, wobei das erste Ende (1a) einen ersten Verbindungsabschnitt (T1) mit einem Außengewinde (6) aufweist, und das zweite Ende (1b) einen zweiten Verbindungsabschnitt (T2) mit einem zylindrischen Teilstück (7) aufweist, ausgehend von welchem das Außengewinde (6) des ersten Verbindungsabschnitts (T1) dazu vorgesehen ist, mittels einer Schraubverbindung, in dem Innengewindeabschnitt (2a, 2b) des Implantatanalogs (2) aufgenommen zu werden,
**dadurch gekennzeichnet, dass** aufgrund der beanspruchten Verwendung das zylindrische Teilstück (7) des zweiten Verbindungsabschnitts (T2) dazu vorgesehen ist, mittels einer Verbindung, in einer zylindrischen, korrespondierend in der Zahnprothese (4) oder dem Abutment-Gerüst (5) für eine Zahnprothese angeordneten Ausnehmung (8) aufgenommen zu werden.

2. Verwendung nach Anspruch 1, **dadurch gekennzeichnet, dass** der zweite Verbindungsabschnitt (T2) einen konischen oder kegelstumpfförmigen Endabschnitt (9) umfasst, welcher sich an das zylindrische Teilstück (7) anschließt und dessen Querschnittsfläche sich von dem ersten Verbindungsabschnitt (T1) hinweg erstreckend abnimmt.

3. Verwendung nach einem der Ansprüche 1 oder 2, **dadurch gekennzeichnet, dass** der zweite Verbindungsabschnitt (T2) mindestens einen radialen Schlitz (10a-10c) umfasst.

4. Verwendung nach einem der Ansprüche 1 bis 3, **dadurch gekennzeichnet, dass** die Verbindungsvorrichtung (1) eine Schraubprägung (11) mit einer nicht kreisrunden Querschnittsfläche umfasst, die über das zweite Ende (1b), das zylindrische Teilstück (7) durchquerend und, gegebenenfalls, den konischen oder kegelstumpfförmigen Endabschnitt (9) durchquerend, zugänglich ist.

5. Verwendung nach einem der Ansprüche 1 bis 4, **dadurch gekennzeichnet, dass** die Verbindungsvorrichtung (1) aus einem Material hergestellt ist, das eine Schmelztemperatur größer oder gleich 80°C aufweist.

6. Verfahren zum Laminieren einer Zahnprothese (4), **dadurch gekennzeichnet, dass** das Verfahren die nachfolgenden Schritte umfasst:
a) Bereitstellen eines Mastermodells (3) mit zumindest einem Implantatanalog (2), das einen Innengewindeabschnitt (2a, 2b) umfasst,
b) Bereitstellen einer Verbindungsvorrichtung (1), die sich längs zwischen einem ersten Ende (1a) und einem zweiten Ende (1b) erstreckt, wobei das erste Ende (1a) einen ersten Verbindungsabschnitt (T1) mit einem Außengewinde (6) umfasst, und das zweite Ende (1b) einen zweiten Verbindungsabschnitt (T2) mit einem zylindrischen Teilstück (7) umfasst und Verbinden, mittels einer Schraubverbindung, des ersten Endes (1a) der Verbindungsvorrichtung (1) in dem Innengewindeabschnitt (2a, 2b) des Implantatanalogs (2),
c) Bereitstellen einer zu laminierenden Zahnprothese (4) umfassend zumindest eine zylindrische Ausnehmung (8), die ausgebildet ist, mittels Verbindung, das zylindrische Teilstück (7) des ersten Verbindungsabschnitts (T1) aufzunehmen,
d) Platzieren der Zahnprothese (4) auf dem Mastermodell (3), wobei eine Verbindung der zylindrischen Ausnehmung (8) auf dem zylindrischen Teilstück (7) des zweiten Verbindungsabschnitts (T2) mittels einer translatorischen Relativbewegung zwischen der Zahnprothese (4) und dem Mastermodell (3) ausgebildet wird,
e) Aufbringen mindestens einer Schicht auf der Zahnprothese (4),
f) Entnehmen der Zahnprothese (4) vom Mastermodell (3) mittels mindestens einer translatorischen Relativbewegung zwischen der Zahnprothese (4) und dem Mastermodell (3), derart, um einen Ofendurchgang der Zahnprothese (4) ohne das Mastermodell (3) zu ermöglichen.

7. Laminierverfahren nach Anspruch 6, **dadurch gekennzeichnet, dass**:
- das Mastermodell (3) eine Mehrzahl an Implantatanalogen (2) mit einem Innengewindeabschnitt (2a, 2b) umfasst,
- die Zahnprothese (4) in der Art einer Brücke ausgebildet ist und eine Mehrzahl zylindrisch ausgebildeter Ausnehmungen (8) umfasst.

8. Laminierverfahren nach einem der Ansprüche 6 oder 7, **dadurch gekennzeichnet, dass** die zylindrisch ausgebildete Ausnehmung (8) ausgebildet ist, eine Fixierschraube zur Fixierung der Zahnprothese (4) auf einem Zahnimplantat aufzunehmen.

9. Verfahren zur Herstellung einer Mehrfach-Zahnprothese (4) mit einem Abutment-Gerüst (5), **dadurch gekennzeichnet, dass** es die folgenden Schritte umfasst:
a1) Bereitstellen eines Mastermodells (3) umfassend mehrere Implantatanaloge (2) mit einem Innengewindeabschnitt (2a, 2b),
b1) Bereitstellen einer Mehrzahl an Verbindungsvorrichtungen (1), die sich längs zwischen einem ersten Ende (1a) und einem zweiten Ende (1b) erstrecken, wobei das erste Ende (1a) einen ersten Verbindungsabschnitt (T1) mit einem Außengewinde (6) umfasst, und das zweite Ende (1b) einen zweiten Verbindungsabschnitt (T2) mit einem zylindrischen Teilstück (7) umfasst und
Verbinden, mittels einer Schraubverbindung, des ersten Endes (1a) der Verbindungsvorrichtungen (1) in dem Innengewindeabschnitt (2a, 2b) der mehreren Implantatanaloge (2),
c1) Bereitstellen eines Abutment-Gerüsts (5) mit mehreren zylindrisch ausgebildeten Ausnehmungen (8), dazu ausgebildet, mittels einer Verbindung, das zylindrische Teilstück (7) des ersten Verbindungsabschnitts (T1) aufzunehmen,
d1) Platzieren des Abutment-Gerüsts (5) auf dem Mastermodell (3), wobei eine Verbindung der zylindrisch ausgebildeten Ausnehmungen (8) auf dem zylindrischen Teilstück (7) des zweiten Verbindungsabschnitts (T2) der Verbindungsvorrichtungen (1) zumindest mittels einer translatorischen Relativbewegung zwischen dem Abutment-Gerüst (5) und dem Mastermodell (3) ausgebildet wird,
e1) Platzieren generischer Zähne (18a-18c) und des mit dem Mastermodell (3) verbundenen Abutment-Gerüsts (5) in einem Hohlabdruck (19), der der Außenform der herzustellenden Zahnprothese entspricht, wobei die generischen Zähne (18a-18c) dann auf den Abutments (21) des Abutment-Gerüsts (5) angeordnet werden,
f1) Injizieren von Harz zwischen den Hohlabdruck (19) und das Mastermodell (3) derart, um die generischen Zähne (18a-18c) und das Abutment-Gerüst (5) zu überziehen,
g1) nachdem das Harz erstarrt ist, Herausnehmen der mit dem Mastermodell (3) verbundenen Baugruppe, gebildet aus den generischen Zähnen (18a-18c) und dem überzogenen Abutment-Gerüst (5), aus dem Hohlabdruck (19),
h1) Entnehmen der durch die generischen Zähne (18a-18b) und das überzogene Abutment-Gerüst (5) gebildeten Unterbaugruppe vom Mastermodell (3) mittels mindestens einer translatorischen Relativbewegung zwischen der Unterbaugruppe und dem Mastermodell (3).

10. Herstellungsverfahren nach Anspruch 9, **dadurch gekennzeichnet, dass** die zylindrisch ausgebildeten Ausnehmungen (8) ausgebildet sind, eine Fixierschraube zur Fixierung der Zahnprothese (4) auf einem Zahnimplantat aufzunehmen.

## Claims

1. Use of a connection device (1) for the connection between a dental prosthesis (4), or an abutment framework (5) for a dental prosthesis, and a master model (3) comprising at least one implant analog (2) having an internal threaded portion (2a, 2b), said connection device (1) extending longitudinally between a first end (1a) and a second end (1b) the first end (1a) having a first connecting segment (T1) comprising an outer thread (6), the second end (1b) having a second connecting segment (T2) comprising a cylindrical portion (7),
during which the outer thread (6) of the first connecting segment (T1) is received by screwing in the internal threaded portion (2a, 2b) provided in the analog implant (2),
**characterized in that**, when used, the cylindrical portion (7) of the second connecting segment (T2) is received by engagement in a corresponding open cylindrical cavity (8) formed in the dental prosthesis (4) or the abutment framework (5) for a dental prosthesis.

2. Use as claimed in claim 1, **characterized in that** the second connecting segment (T2) has a conical or frustoconical final segment (9) which follows on from the cylindrical portion (7),the cross section of which decreases away from the first connecting segment (T1) .

3. Use as claimed in either of claims 1 and 2, **characterized in that** the second connecting segment (T2) has at least one radial slit (10a-10c).

4. Use as claimed in any one of claims 1 through 3, **characterized in that** the connection device (1) has a screwing socket (11) with a non-circular cross section, accessible from the second end (1b) via the cylindrical portion (7) and, if appropriate, via the conical or frustoconical final segment (9).

5. Use as claimed in any one of claims 1 through 4, **characterized in that** the connection device (1) is made of a material having a melting point of greater than or equal to 80°C.

6. A method for layering a dental prosthesis (4), **characterized in that** said method comprises the following steps:
a) making available a master model (3) comprising at least one implant analog (2) with an internally threaded segment (2a, 2b),
b) providing a connection device (1) extending longitudinaly between a first end (1a) and a second end (1b), the first end (1a) having a first connecting segment (T1) comprising an outer thread (6), the second end (1b) having a second connecting segment (T2) comprising a cylindrical portion (7), and connecting by screwing the first end (1a) of the connection device (1) in the internally threaded segment (2a, 2b) of the implant analog (2),
c) making available a dental prosthesis (4) to be layered, comprising at least one open cylindrical cavity (8) configured to receive the cylindrical portion (7) of the first connecting segment (T1) by engagement,
d) placing the dental prosthesis (4) on the master model (3) by causing the open cylindrical cavity (8) to engage on the cylindrical portion (7) of the second connecting segment (T2) by means of a movement of relative translation between the dental prosthesis (4) and the master model (3),
e) applying at least one layer to the dental prosthesis (4),
f) withdrawing the dental prosthesis (4) from the master model (3) by means of at least one movement of relative translation between the dental prosthesis (4) and the master model (3), so as to allow the dental prosthesis (4) to be passed into the furnace without the master model (3).

7. The layering method as claimed in claim 6, **characterized in that**:
- the master model (3) has a plurality of implant analogs (2) with an internally threaded segment (2a, 2b),
- the dental prosthesis (4) is of the bridge type and has a plurality of open cylindrical cavities (8).

8. The layering method as claimed in either of claims 6 and 7, **characterized in that** the open cylindrical cavity (8) is configured to receive a fixation screw for fixing the dental prosthesis (4) on a dental implant.

9. A method for producing a multiple dental prosthesis (4) having an abutment framework (5), **characterized in that** said method comprises the following steps:
a1) making available a master model (3) comprising several implant analogs (2) with an internally threaded segment (2a, 2b),
b1) providing a plurality of connection devices (1) extending longitudinaly between a first end (1a) and a second end (1b), the first end (1a) having a first connecting segment (T1) comprising an outer thread (6), the second end (1b) having a second connecting segment (T2) comprising a cylindrical portion (7), and connecting screwing the first end (1a) of said connection devices (1) in the internally threaded segment (2a, 2b) of several implant analogs (2), c1) making available an abutment framework (5) comprising several open cylindrical cavities (8) configured to receive the cylindrical portion (7) of the first connecting segment (T1) by engagement,
d1) placing the abutment framework (5) on the master model (3) by causing the open cylindrical cavities (8) to engage on the cylindrical portion (7) of the second connecting segment (T2) of the connection devices (1) by means of a movement of relative translation between the abutment framework (5) and the master model (3),
e1) placing generic teeth (18a-18c) and the abutment framework (5) fixed to the master model (3) in a hollow impression (19) corresponding to the outer shape of the dental prosthesis to be produced, the generic teeth (18a-18c) then being disposed on the abutments (21) of the abutment framework (5),
f1) injecting resin between the hollow impression (19) and the master model (3) in such a way as to cover the generic teeth (18a-18c) and the abutment framework (5), g1) after the resin has solidified, extracting from the hollow impression (19) the assembly which is fixed to the master model (3) and which is formed by the covered generic teeth (18a-18c) and abutment framework (5), h1) withdrawing the subassembly, formed by the covered generic teeth (18a-18c) and abutment framework (5), from the master model (3) by means of at least one movement of relative translation between said subassembly and the master model (3).

10. The manufacture method as claimed in claim 9, **characterized in that** the open cylindrical cavities (8) are configured to receive a fixation screw for fixing the dental prosthesis (4) on a dental implant.
